# EUROPEAN PATENT APPLICATION

(11) **EP 4 745 636 A1**
(43) Date of publication of application: **20.05.2026**
(21) Application number: 24212555.7
(22) Date of filing: 13.11.2024
(51) Int. Cl.: G02B 6/30, G02B 6/34, G02B 6/38

(54) **PHOTONIC INTEGRATED CIRCUIT, SYSTEM AND METHOD OF MANUFACTURING A PHOTONIC INTEGRATED CIRCUIT**

(71) Applicant: Universität Heidelberg, 69117 Heidelberg (DE); Gehring, Helge, 48485 Neuenkirchen (DE)
(72) Inventor: Gehring, Helge, 48485 Neuenkirchen (DE); PERNICE, Wolfram, 69117 Heidelberg (DE); JUNG, Erik, 76646 Bruchsal (DE); BANKWITZ, Rasmus, 69117 Heidelberg (DE)
(74) Representative: Vossius & Partner Patentanwälte Rechtsanwälte mbB

(57) **Abstract**

The invention relates to A Photonic Integrated Circuit, PIC, comprising: a PIC connector for optical coupling of the PIC to a corresponding connector, the corresponding connector comprising a plurality of optical fibers, wherein the PIC connector comprises: a plurality of optical couplers, each optical coupler of the plurality of optical couplers being configured to optically couple to a corresponding optical fiber of the plurality of optical fibers; a PIC alignment structure configured to engage with a corresponding alignment structure of the corresponding connector so that, when the PIC alignment structure is engaged with the corresponding alignment structure, each optical coupler is aligned with the corresponding optical fiber of the plurality of optical fibers to enable an optical coupling between each optical coupler and the corresponding optical fiber of the plurality of optical fibers

## Description

The invention relates to photonic integrated circuits (PIC). In particular, the invention relates to packaging PICs and/or to a connector of a PIC (PIC connector). Furthermore, the invention relates to a method of manufacturing a PIC.

Photonic integrated circuits (PICs) enable compact packaged devices for light control and manipulation replacing large footprint free-space fiber-optical setups. However, low-loss photonic packaging of those PICs is a remarkable challenge, as coupling interfaces between PICs and/or other components require precise and stable alignment below micrometer resolution. This precise alignment requires large scale optical setups, which restricts the modularity and exchangeability of the PICs.

The term "packaging" refers to the PIC's supply to ensure its functionality. In particular, electronic packaging involves providing current to on-chip active optical elements. Photonic packaging involves supplying photons to the PIC, which are controlled and manipulated by the PIC.

Different approaches are followed in state-of-the art fiber-optic to PIC coupling interfaces. Permanent alignment can be achieved by gluing bare fibers or fiber-arrays directly onto the optical couplers of the PIC (e.g., a coupling facet), either through surface coupling utilizing diffractive PIC structures or side coupling with spot-size converting PIC optics.

Solutions requiring fiber or fiber-array gluing to the PIC suffer from low modularity since the connection between the fiber or fiber-array and the PIC is permanent so that the PIC is not exchangeable. Such solutions also have economic drawbacks. Furthermore, manually aligned coupling interfaces require 6-axis alignment, which are inherently mechanically unstable and necessitate closed-loop stabilizing algorithms to decrease coupling efficiency fluctuations. These are cost extensive and time ineffective. Additionally, the 6-axis stage optimization limits the efficiency of applications needing ultra-high intensity stabilization, like quantum computing.

Therefore, there is a need to improve the connection of PICs to optical fibers and at the same time making them more modular. It is thus an object of the invention to provide an improved connection between PICs and optical fibers. In particular, it is an object to provide a connection that can be repeatably disconnected and reconnected. In other words, it is an object to provide a PIC that allows for a high modularity of PIC systems. Furthermore, it is an object to provide a low-loss optical coupling between an optical connector of the PIC and optical fibers.

The invention is defined in the independent claims. Further embodiments of the invention are set out in the dependent claims, the description and the drawings. Unless stated otherwise, all aspects, embodiments and features disclosed in the following and shown in the drawings are aspects, embodiments and features of the invention, respectively.

A first aspect relates to a Photonic Integrated Circuit (PIC). The PIC comprises a PIC connector for optical coupling of the PIC to a corresponding connector, the corresponding connector comprising a plurality of optical fibers. The PIC connector comprises a plurality of optical couplers, each optical coupler of the plurality of optical couplers being configured to optically couple to a corresponding optical fiber of the plurality of optical fibers. The PIC connector further comprises a PIC alignment structure configured to engage with a corresponding alignment structure of the corresponding connector so that, when the PIC alignment structure is engaged with the corresponding alignment structure, each optical coupler is aligned with the corresponding optical fiber of the plurality of optical fibers to enable an optical coupling between each optical coupler and the corresponding optical fiber of the plurality of optical fibers.

A PIC is a Microchip containing two or more photonic components that form a functioning optical circuit. PICs provide functions for information signals imposed on optical wavelengths. Preferably, the wavelengths are between 850 nm to 1650 nm. However, other wavelengths are possible. A PIC may be formed from a waveguide that is provided on a substrate. The substrate may be Silicon Dioxide on Silicon and the waveguide may be Silicon Nitride. Also, other materials for the substrate and the waveguide are possible. For example, the PIC may comprise a Lithium Niobate waveguide and the substrate may be Silicon Dioxide on Silicon or the waveguide may be pure Silicon and the substrate may be Silicon Dioxide on bulk Silicon.

The PIC may comprise passive and/or active optical elements, preferably a network of passive and/or active optical elements. For example, the PIC may comprise passive optical elements such as power splitters, optical filters or active optical elements such as lasers or electro-optical modulators. The optical elements may, e.g., be formed in the waveguide, e.g., by virtue of etching techniques. PICs may have a planar structure, so that light propagates within the PIC in a direction parallel to the plane of the PIC. Light coupled into the PIC thus may have to be redirected so that it propagates within the plane of the PIC. Similarly, light coupled out of the PIC may have to be redirected so that it emerges at a suitable angle with respect to the plane of the PIC. This may be achieved by suitable optical couplers as described herein.

The term "PIC connector" refers to a connector of the PIC. The term "corresponding connector" refers to a connector corresponding to the PIC connector that is connectable to the PIC connector. For example, the corresponding connector may be a connector of a n optical cable that is connectable to the PIC to connect the PIC to other components and/or PICs. For example, the optical cable may be a Multi-fiber Termination Push-on (MTP) cable. The corresponding connector comprises a plurality of end faces of optical fibers as well as an alignment structure (corresponding alignment structure). Preferably, the end face of each optical fiber comprises a facet. The term "facet" refers to an inclined and/or chamfered surface of the end of the optical fiber.

The term "optical coupler" refers to a structure of the PIC that is configured to couple light to and from the PIC. The optical coupler may, e.g., be an in-plane or an out-of-plane coupler. With an in-plane coupler, light is coupled in and/or out from the PIC from lateral sides of the PIC. Thus, the light propagates in the same plane as the PIC. With an out-of-plane coupler, light is coupled in and/or out from the PIC from the top or bottom surface of the PIC. In other words, an out-of-plane coupler may be located on the top or bottom surface of the PIC. Thus, light does not propagate in the same plane as the PIC. Out-of-plane couplers comprise suitably designed coupling structures that modify the k-vector direction of the incident light beam, allowing coupling of light into the integrated waveguide. In other words, light is redirected from a direction that is angled with respect to the plane of the PIC to a direction parallel to the plane of the PIC and vice-versa.

The term "PIC alignment structure" refers to the alignment structure of the PIC and the term "corresponding alignment structure" refers to the alignment structure of the corresponding connector. In other words, the alignment structure is a structure configured to align each optical fiber of the plurality of optical fibers with a corresponding optical coupler of the plurality of optical couplers. Although it is stated that the PIC alignment structure is configured to align each optical fiber, it is understood that the PIC alignment structure and the corresponding alignment structure together are configured to align each optical fiber of the plurality of optical fibers with a corresponding optical coupler of the plurality of optical couplers Preferably, the PIC alignment structure and/or the corresponding alignment structure are/is configured to define the position and orientation of each optical fiber with respect to the corresponding optical coupler. In particular, the PIC alignment structure and/or the corresponding alignment structure may be configured to define the position and orientation of the end facet of each optical fiber with respect to the corresponding optical coupler. Furthermore, the PIC alignment structure and/or the corresponding alignment structure may also be configured to define the spacing between the optical coupler and the end face of the corresponding optical fiber. Preferably, the position includes coordinates in in the plane of the waveguide. More preferably, the position additionally includes a spacing between the optical coupler and the end face of the corresponding optical fiber. The spacing may be defined in a direction parallel to the direction of the light incident to and/or emitted from the optical coupler. Preferably, the direction may be substantially vertical to a plane of the PIC. More preferably, the direction may be angled with respect to the vertical direction, e.g., by an angle of 8 degrees. Said spacing may ensure that the end-faces of the optical fibers are located at the focus points of the corresponding optical couplers and/or that any structures of the PIC, in particular the coupling structures, are not destroyed while establishing the connection between the PIC connector and the corresponding connector.

Such a PIC allows to repeatably connect and disconnect the PIC connector to the corresponding connector. Furthermore, due to the PIC alignment structure, the location of each optical fiber with respect to the corresponding optical coupler is well-defined, so that a low-loss optical coupling between each optical coupler and the corresponding optical fiber may be established. Such a packaging of PICs allows to set up PIC systems with little effort and/or to reconfigure PIC systems by replacing one or more PICs. In this way, the PIC allows to provide PIC systems with a high degree of modularity.

Preferably, the plurality of optical couplers comprises an out-of-plane coupler, preferably a 3D-printed out-of-plane coupler.

A 3D-printed out-of-plane coupler is an out-of-plane coupler that has been provided on the PIC by 3D-printing.

Preferably, the 3D-printed out-of-plane coupler may be formed from a resin, preferably a polymer resin. The polymer may have a refractive index that is between the refractive index of the waveguide of the PIC and the refractive index of the substrate of the PIC. The refractive index of the resin may be greater than 1.44, preferably be greater than 1.54. The resin may be suited to form structures with resolution of 0.1 µm. The resin may be suited to transmit light with a yield of over 95% from near-infrared to UV wavelengths.

Out of plane couplers may provide more degrees of freedom for arranging an optical coupler on the PIC.

3D printing allows to form optical couplers onto the PIC with high resolution and/or precision. In this way, a low-loss optical coupling to optical fibers may be provided.

Preferably, each optical coupler of the plurality of optical couplers is an out-of-plane coupler, preferably a 3D-printed out-of-plane coupler.

Preferably, the plurality of optical couplers comprises a total internal reflection coupler.

A total internal reflection coupler is an optical coupler that redirects the incident light into the plane of the PIC by virtue of total internal reflection.

Total internal reflection couplers may provide a low-loss coupling to corresponding optical fibers. Providing optical couplers in form of total internal reflection couplers may be particularly advantageous, when the total internal reflection coupler has a refractive index that is between the refractive index of the waveguide of the PIC and the refractive index of the substrate of the PIC.

Preferably, the total internal reflection coupler is 3D printed onto the PIC.

Preferably, the total internal reflection coupler is 3D printed onto the PIC by Direct Laser Writing, more preferably with a lateral resolution of 0.2 µm or less, even more preferably with a lateral resolution of 0.1 µm or less.

The term "lateral resolution" refers to a resolution in directions parallel to the plane of the PIC.

Preferably, the total internal reflection coupler is formed of a resin, more preferably of a polymeric resin. The polymer may have a refractive index that is between the refractive index of the waveguide of the PIC and the refractive index of the substrate of the PIC.

For example, the optical couplers may be 3D printed with the resin "IP-DIP2" of Nanoscribe.

Preferably, each optical coupler of the plurality of optical couplers is a total internal reflection coupler.

Preferably, each total internal reflection coupler is 3D printed onto the PIC, more preferably by Direct Laser Writing, even more preferably with a lateral resolution of 0.2 µm or less, even more preferably with a lateral resolution of 0.1 µm or less.

Preferably, the plurality of optical couplers comprises a grating coupler.

The term "grating coupler" refer to an optical coupler comprising gratings formed in the PIC, e.g., by etching. The gratings form a bragg reflector, which causes the incident light to be redirected into the plane of the PIC. Similarly, the gratings cause the outgoing light to be redirected out of the plane of the PIC. Grating couplers may be advantageous in cases where it is not possible to find a material for the optical coupler that has a refractive index that lies between the refractive index of the waveguide of the PIC and the refractive index of the substrate of the PIC.

Preferably, each optical coupler of the plurality of optical couplers is a grating coupler.

Preferably, the PIC alignment structure comprises at least one protruding structure and the corresponding alignment structure of the corresponding connector comprises at least one recess configured to receive the at least one protruding structure.

The protruding structure may be understood to protrude from the plane of the PIC.

The at least one protruding structure and the at least one recess may both be sized so that the at least one protruding structure precisely engages with the at least one recess. The manufacturing tolerances of the at least one protruding structure and/or the at least one recess may be 1.5 µm or less.

Providing the PIC alignment structure in the form of a protruding structure and the corresponding alignment structure in the form of a recess allows to precisely set the position and orientation of the corresponding connector with respect to the PIC connector.

Preferably, the PIC alignment structure comprises two protruding structures, preferably exactly two protruding structures, and the corresponding alignment structure of the corresponding connector comprises two recesses, preferably exactly two recesses, each recess being configured to receive a corresponding one of the two protruding structures.

Providing at least two protruding structures allows to fix the position and the orientation of the corresponding connector with respect to the PIC connector.

Preferably, the at least one protruding structure is a pin.

The pin may be understood to protrude from the plane of the PIC.

Preferably, the pin has a length between 1 mm and 2.4 mm, more preferably between 1.3 mm and 2 mm, even more preferably of 1.7 mm.

Preferably, the pin has a diameter between 650 µm and 750 µm, more preferably between 680 µm and 705 µm , even more preferably of 700 µm.

Preferably, the PIC alignment structure comprises at least one spacer to ensure that an end face of an optical fiber of the plurality of optical fibers is spaced apart from a corresponding optical coupler of the plurality of optical couplers by a predetermined distance when the PIC alignment structure is engaged with the corresponding alignment structure of the corresponding connector.

The spacer may be provided separate to the protruding structure of the PIC alignment structure and/or the spacer may be connected to, preferably formed in one piece with, the protruding structure of the PIC alignment structure.

In this way, the facet provided on the end face of the optical fiber is located at the predetermined distance when the corresponding alignment structure is fully engaged with the PIC alignment structure and/or the corresponding connector is fully engaged with the PIC connector. The predetermined distance may be set so that the end face of the optical fiber is located at the focal point of the corresponding optical coupler of the plurality of optical couplers.

Preferably, the PIC alignment structure comprises at least one spacer to ensure that the end face of all optical fibers of the plurality of optical fibers are spaced apart from a corresponding optical coupler of the plurality of optical couplers by a predetermined distance when the PIC alignment structure is engaged with the corresponding alignment structure of the corresponding connector.

In this way, the facet provided on the end face of each optical fiber is located at the predetermined distance when corresponding alignment structure is fully engaged with the PIC alignment structure and/or the corresponding connector is fully engaged with the PIC connector. The predetermined distance may be set so that the end face of each optical fiber is located at the focal point of the corresponding optical coupler of the plurality of optical couplers.

Furthermore, the at least one spacer may be configured to prevent that the end faces of the optical fibers crush into the optical couplers. The at least one spacer may thus prevent damage to the optical couplers when the corresponding connector is connected to the PIC connector.

Preferably, the at least one protruding structure is a pin and the at least one spacer comprises a base of the pin.

The term "base" refers to a structure that is arranged between the PIC and the pin. The base may be formed in one piece with the pin and/or the base may be formed of the same material as the pin. The base has a diameter that is larger than the diameter of the pin. The base may be concentrically arranged with respect to the pin.

In this way, the spacer may be formed together with the pin. Thus, no additional manufacturing step is required to provide the spacer. This may reduce production time and/or production costs.

Preferably the at least one spacer comprises a spacer pad that is separate from the at least one protruding structure. Preferably, the at least one spacer comprises at least two, more preferably at least four spacer pads that are separate to the at least one protruding structure.

In this way, it may be ensured that all end faces of the optical fibers are correctly spaced apart from the corresponding optical couplers.

Preferably, each optical fiber comprises an end face that is angled with respect to a longitudinal axis of the optical fiber. Furthermore, the PIC alignment structure is configured so that the longitudinal axis of each optical fiber is aligned at an angle with respect to the normal to a surface of the PIC when the PIC alignment structure is engaged with the corresponding alignment structure. The normal is a line and/or direction that is perpendicular to the surface of the PIC, wherein the PIC is planar. In other words, each optical fiber comprises a facet that is angled with respect to the longitudinal axis of the optical fiber.

The angled end face or facet of the optical fiber minimizes back reflections and improves signal quality. Furthermore, it ensures that potentially reflected light is directed away from the optical axis, preventing it from traveling back through the optical fiber. This significantly improves the signal to noise ratio. By providing the PIC alignment structure with an angle, it is ensured that the end faces of the optical fibers are correctly orientated with respect to the optical couplers.

Preferably, the end face of each optical fiber is angled with respect to its longitudinal axis at an angle of between 4° and 12°, preferably between 6° and 10°, more preferably 8°. Furthermore, the PIC alignment structure comprises at least one protruding structure having a longitudinal axis, the longitudinal axis being angled with respect to a plane of the PIC at an angle of between 4° and 12°, preferably between 6° and 10°, more preferably 8°.

Preferably, the PIC alignment structure is 3D printed onto the PIC, more preferably by Direct Laser Writing, even more preferably with a lateral resolution of 1.5 µm or less.

Preferably, the PIC alignment structure is formed of a resin, more preferably of a polymeric resin. For example, the PIC alignment structures may be 3D printed with the resin IPX-Q provided by Nanoscribe.

The resin of the PIC alignment structure may be a resin that allows 3D printing with a lateral resolution of 1.5 µm or less. Furthermore, the resin may be mechanically stable. More precisely, the resin may withhold forces in the rage of 1 N to 10 N, preferably of up to 10 N.

Preferably, the optical couplers are 3D printed onto the PIC, more preferably by Direct Laser Writing, even more preferably with a lateral resolution of 1.5 µm or less.

Preferably, the optical couplers are formed of a resin, more preferably of a polymeric resin. For example, the optical couplers may be 3D printed with the resin IP-DIP2 provided by Nanoscribe.

Preferably, the PIC alignment structure and the plurality of optical couplers are 3D printed onto the PIC using the same 3D printing process, more preferably Direct Laser Writing, even more preferably with a lateral resolution of 1.5 µm or less.

In this way, the PIC alignment structure and the plurality of optical couplers may be formed in the same manufacturing step. Nevertheless, the plurality of optical couplers and the PIC alignment structure may be formed in two different 3D printing passes. In this way, the PIC alignment structure and the optical couplers may be formed of different resin, so that the PIC alignment structure is formed of a resin that is optimized with respect to mechanical stability and/or the optical coupler is formed of a resin that is optimized with respect to optical properties.

By forming the PIC alignment structure and the optical couplers using the same 3D printing process, the production process of the PICs may be less complex, so that production time and/or production costs can be reduced.

Preferably, the PIC further comprises a rough alignment structure mechanically coupled to the PIC.

The rough alignment structure may be configured to pre-align the corresponding connector with the PIC connector for establishing the connection between the corresponding connector and the PIC connector. In particular, the rough alignment structure may be configured to pre-align the PIC alignment structure with the corresponding alignment structure. Furthermore, the rough alignment structure may be configured to hold the corresponding connector in position when the connection between the PIC connector and the corresponding connector has been established. In other words, the rough alignment structure limits the mechanical forces and/or stress that act on the PIC alignment structure.

In this way, the rough alignment structure may facilitate establishing the connection between the PIC connector and the corresponding connector. Furthermore, the rough alignment structure may improve the mechanical stability of the connection between the PIC connector and the corresponding connector. In that sense, the corresponding losses for fiber-to-chip coupling may get reproducible. In particular, the rough alignment structure may prevent damages on the PIC alignment structure.

Preferably, the rough alignment structure forms a socket for the corresponding connector.

Such a socket may be well suited for pre-aligning the corresponding connector and the PIC connector as well as to hold the PIC connector in place.

Preferably, the rough alignment structure is configured to set a position of the corresponding connector in a plane of the PIC. In other words, the rough alignment structure is configured to set the in-plane coordinates of the corresponding connector.

In said position, the PIC alignment structure and the corresponding alignment structure may overlap, so that the connection can be established.

Preferably, the rough alignment structure is configured to set an angle of the corresponding connector with respect to the plane of the PIC.

In this way, the orientation of the PIC alignment structure matches the orientation of the corresponding alignment structure, so that the connection can be established.

Preferably, the rough alignment structure is formed by 3D printing.

Preferably, the rough alignment structure is 3D printed onto the PIC, more preferably by Direct Laser Writing.

Preferably, the rough alignment structure is formed by digital light processing 3D printing.

Preferably, the PIC comprises a coupling structure configured to engage with the rough alignment structure.

The coupling structure may be configured to ensure that the rough alignment structure is correctly aligned with respect to the PIC connector. In this way, when the position of the corresponding connector is set by the rough alignment structure, the corresponding alignment structure is aligned with the PIC alignment structure.

Preferably, the coupling structure comprises at least one protruding structure.

The at least one protruding structure may protrude from the plane of the PIC. Said at least one protruding structure may have the same or a similar shape and/or the same or similar dimensions as the at least one protruding structure of the PIC alignment structure.

Preferably, the at least one protruding structure of the coupling structure is a pin.

The pin may have the same or a similar shape and/or the same or similar dimensions as the pin of the PIC alignment structure.

Preferably, the coupling structure is 3D printed onto the PIC, preferably by Direct Laser Writing, more preferably with a lateral resolution of 1.5 µm or less.

Preferably, the coupling structure and the PIC alignment structure are 3D printed onto the PIC using the same 3D printing process, more preferably Direct Laser Writing, even more preferably with a lateral resolution of 1.5 µm or less.

In this way, the coupling structure and the PIC alignment structure may be formed in the same manufacturing step. By forming PIC the alignment structure and the coupling structure using the same 3D printing process, the production process of the PICs may be less complex, so that production time and/or production costs can be reduced.

Preferably, the coupling structure, the PIC alignment structure and the plurality of optical couplers are 3D printed onto the PIC using the same 3D printing process, preferably Direct Laser Writing, more preferably with a lateral resolution of 1.5 µm or less.

In this way, the optical couplers, the coupling structure and the PIC alignment structure may be formed in the same manufacturing step. By forming the optical couplers, the PIC alignment structure and the coupling structure using the same 3D printing process, the production process of the PICs may be less complex, so that production time and/or production costs can be reduced.

Preferably, the coupling structure is formed of a resin, more preferably of a polymeric resin.

Preferably, the coupling structure and the PIC alignment structure are formed of the same resin.

In this way, the coupling structure and the PIC alignment structure may be formed in the same production process. This further facilitates the production process and reduces production time and/or production costs.

Preferably, the PIC comprises at least 6, preferably at least 12, more preferably at least 24 optical couplers.

Preferably, the PIC connector comprises at least a row of optical couplers, more preferably the row comprises at least 6 optical couplers.

Preferably, the corresponding connector comprises at least a row of optical fibers, more preferably the row comprises at least 6 optical fibers.

Preferably, the PIC connector comprises an array of optical couplers, the array comprising at least two rows, each row more preferably comprising at least 6 optical couplers.

Preferably, the corresponding connector comprises an array of optical fibers, the array comprising at least two rows, each row more preferably comprising at least 6 optical fibers.

A further aspect relates to a system comprising the PIC as disclosed herein and the corresponding connector.

Preferably, the system further comprises a fiber-optic cable, wherein the corresponding connector is provided on one end of the fiber-optic cable.

A further aspect relates to a system comprising a first PIC as disclosed herein, a second PIC as disclosed herein, and a fiber-optic cable comprising a first corresponding connector configured to connect to the first PIC and a second corresponding connector configured to connect to the second PIC.

A further aspect relates to a method of manufacturing a Photonic Integrated Circuit (PIC) comprising: providing a waveguide; providing a plurality of optical couplers onto the waveguide, each optical coupler of the plurality of optical couplers being configured to optically couple to a corresponding optical fiber of a plurality of optical fibers; and providing a PIC alignment structure onto the waveguide. The PIC alignment structure is configured to engage with a corresponding alignment structure of a corresponding connector, the corresponding connector comprising the plurality of optical fibers, so that, when the PIC alignment structure is engaged with the corresponding alignment structure, each optical coupler is aligned with a corresponding optical fiber of the plurality of optical fibers to enable an optical coupling between each optical coupler and the corresponding optical fiber of the plurality of optical fibers.

Features, technical effects, advantages and explanations provided with respect to the PIC and the system also apply to the method of manufacturing a PIC. For example, for each structure described with respect to the PIC and/or the system, the method may comprise a step of providing such a structure.

Preferably, the PIC alignment structure comprises at least one spacer to ensure that an end face of an optical fiber of the plurality of optical fibers is located at a predetermined vertical distance from a corresponding optical coupler of the plurality of optical couplers when the PIC alignment structure is engaged with the corresponding alignment structure of the corresponding connector.

Preferably, the PIC alignment structure is 3D printed onto the PIC, preferably by Direct Laser Writing, more preferably with a lateral resolution of 1.5 µm or less.

Preferably, the PIC alignment structure is formed of a resin, more preferably of a polymeric resin.

Preferably, the plurality of optical couplers is provided by 3D printing a plurality of total internal reflection couplers onto the waveguide, preferably by Direct Laser Writing, more preferably with a lateral resolution of 0.2 µm or less.

Preferably, the plurality of optical couplers are formed of a resin, more preferably of a polymeric resin.

Preferably, the method further comprises providing a rough alignment structure, the rough alignment structure being configured to be mechanically coupled to the PIC, the rough alignment structure forming a socket for the corresponding connector.

Preferably, the rough alignment structure is formed by 3D printing, preferably by digital light processing 3D printing.

Preferably, the method further comprises providing a coupling structure onto the waveguide, the coupling structure being configured to engage with the rough alignment structure.

Preferably, the coupling structure is 3D printed onto the PIC, preferably by Direct Laser Writing, more preferably with a lateral resolution of 1.5 µm or less.

Preferably, wherein the coupling structure is formed of a resin, more preferably of a polymeric resin.

Preferably, the coupling structure and the PIC alignment structure are 3D printed onto the PIC using the same 3D printing process, preferably Direct Laser Writing, more preferably with a lateral resolution of 1.5 µm or less.

Preferably, the coupling structure and the PIC alignment structure are formed of the same resin.

Preferably, the coupling structure, the PIC alignment structure and the optical couplers are 3D printed onto the waveguide using the same 3D printing process, preferably Direct Laser Writing, more preferably with a lateral resolution of 0.2 µm or less for the optical couplers and 1.5 µm or less for the coupling structure and the PIC alignment structure.

Preferred embodiments of the present invention are further elucidated below with reference to the drawings.
Fig. 1 shows a PIC according to an exemplary embodiment.
Fig. 2a shows a PIC comprising a rough alignment structure according to an exemplary embodiment.
Fig. 2b shows a PIC according to an exemplary embodiment without rough alignment structure.
Fig. 2c shows the PIC of Fig. 2b including a rough alignment structure and the corresponding connector.
Fig. 3a shows a grating coupler according to an exemplary embodiment.
Fig. 3b shows a total internal reflection coupler according to an exemplary embodiment.
Fig. 3c shows a total internal reflection coupler according to an exemplary embodiment.
Fig. 4 shows a system according to an exemplary embodiment.
Fig. 5 shows a system according to an exemplary embodiment.
Fig. 6a shows a diagram showing the signal loss of different connections.
Fig. 6b shows a diagram showing the signal loss for a total internal reflection coupler depending on the deviation from the optimal position.
Fig. 7 shows a flow chart of a manufacturing method according to an exemplary embodiment.

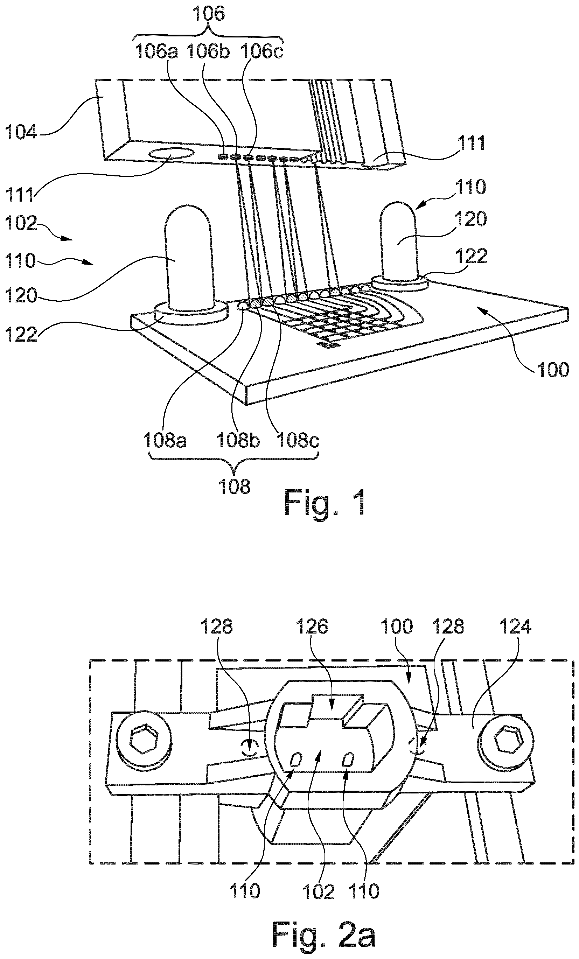

Fig. 1 shows a Photonic Integrated Circuit (PIC) 100 according to an exemplary embodiment. The PIC comprises a PIC connector 102. The PIC connector 102 comprises a plurality of optical couplers 108. Each optical coupler 108a, 108b, 108c of the plurality of optical couplers 108 is configured to optically couple with a corresponding optical fiber 106a, 106b, 106c of a plurality of optical fibers 106. Each optical coupler 108a, 108b, 108c may be an out-of-plane coupler, e.g., a total internal reflection coupler or a grating coupler. The PIC connector further comprises a PIC alignment structure 110. In this exemplary embodiment, the PIC alignment structure 110 is a protruding structure. More precisely, the PIC alignment structure 110 comprises a pin 120. The PIC alignment structure is configured to be received in a corresponding recess 111 of the corresponding connector 104. Furthermore, the PIC alignment structure 110 comprises a spacer configured to set a spacing between the optical fibers 106a, 106b, 106c and the corresponding optical couplers 108a, 108b, 108c when the connection between the PIC connector 102 and the corresponding connector 104 has been established. This ensures that the end faces of the optical fibers 106a, 106b, 106c are positioned at the focal points of the optical couplers 108a, 108b, 108c. In the current exemplary embodiment, the spacer is provided as a base 122 of the pins 120.

The end-faces of the optical fibers 106a, 106b, 106c are angled with respect to the longitudinal direction of the optical fibers 106a, 106b, 106c with an angle of 8 degrees. Correspondingly, the pins 120 are angled with respect to the plane of the PIC 100 with an angle of 8 degrees, so that the end faces of the optical fibers 106a, 106b, 106c are correctly orientated with respect to the optical couplers 108a, 108b, 108c.

The optical couplers 108a, 108b, 108c may be total internal reflection couplers. In this case, the optical couplers may be formed on the PIC 100 by 3D printing, preferably by Direct Laser Writing. The optical couplers are, e.g., formed from IP-DIP2 provided by Nanoscribe.

The pins 120 are formed by 3D printing, preferably by Direct Laser Writing. The pins 120 are, for example, formed from IPX-Q provided by Nanoscribe. The base 122 is formed in one piece with and/or from the same material as the corresponding pin 120. Thus, the base 122 and the pin 120 may be formed in the same 3D printing step.

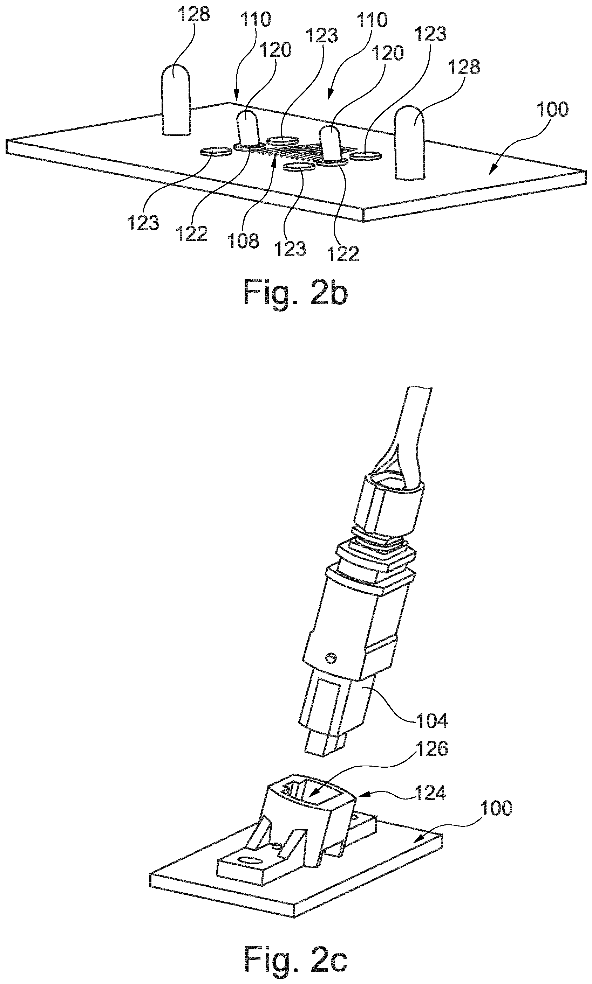

Although Fig. 1 does not show a rough alignment structure, the PIC 100 of Fig. 1 may additionally comprise a rough alignment structure and coupling structures configured to engage with the rough alignment structure as disclosed herein. For example, the PIC 100 may comprise a rough alignment structure as shown in and described with respect to Figs. 2a and 2c.

Fig. 2a shows a PIC 100 according to an exemplary embodiment. The PIC 100 may be structured as shown in and described with respect to Fig. 1. In addition, the PIC 100 of Fig. 2a comprises a rough alignment structure 124, which forms a socket 126 configured to receive the corresponding connector 104. The rough alignment structure 124, in particular the socket 126, is configured to position the corresponding connector so that the optical fibers 106a, 106b, 106c optically couple with the corresponding optical couplers 108a, 108b, 108c when the connection between the PIC connector 102 and the corresponding connector is engaged.

The rough alignment structure may be formed by 3D printing, e.g., digital light processing.

The PIC 100 comprises coupling structures 128 configured to engage with recesses in the rough alignment structure 124, so that the rough alignment structure 124 is correctly positioned with respect to the PIC connector 102.

Fig. 2b shows a PIC 100 according to an exemplary embodiment. The PIC 100 of Fig. 2b is similar to the PIC 100 of Fig. 1, so that the explanations given with respect to Fig. 1 apply to Fig. 2b. Compared to the PIC 100 of Fig. 1, the PIC 100 shown in Fig. 2b further comprises two coupling structures 128 configured to engage with corresponding recesses of a rough alignment structure (not shown in Fig. 2b). Preferably, the coupling structures 128 are pins. Furthermore, the PIC 100 of Fig. 2b comprises spacers in the form of bases 122 of pins 120 as well as spacer pads 123. Furthermore, the pins 120 are angled with respect to the plane of the PIC, so that the end faces of the optical fibers of the corresponding connector are correctly orientated with respect to the optical couplers 108.

Fig. 2c shows the PIC of Fig. 2b, wherein the rough alignment structure 124 is mounted to the PIC 100. The rough alignment structure 124 provides a socket 124 for the corresponding connector 104. Furthermore, the corresponding connector 104 is aligned at the correct angle, so that the end faces of the optical fibers of the corresponding connector 104 are correctly orientated with respect to the optical couplers 108.

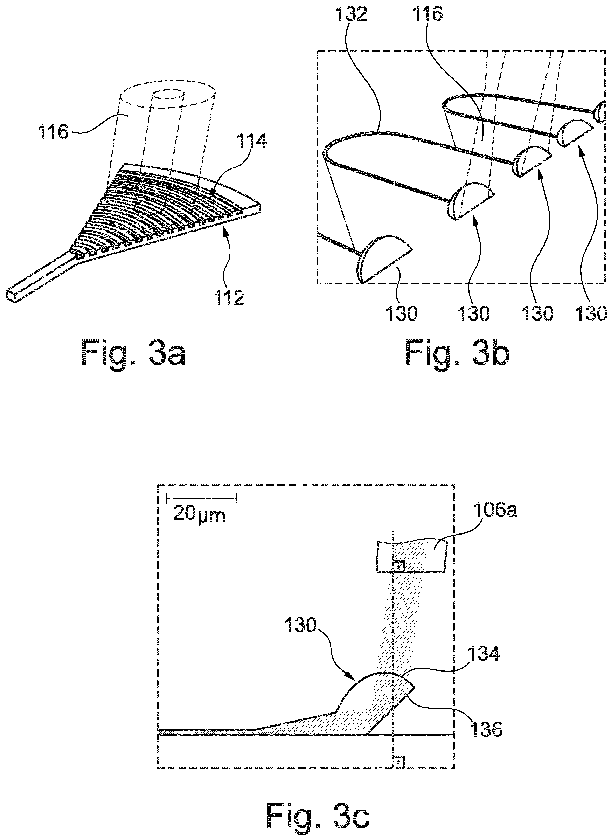

Fig. 3a shows a grating coupler 112 according to an exemplary embodiment. In some embodiments, the optical couplers of the PIC may be provided in the form of grating couplers 112. The grating coupler 112 comprises a grating 114, which is formed, e.g., by etching techniques into the waveguide of the PIC. The grating 114 functions as a bragg reflector configured to redirect the incident light beam 116 into the plane of the PIC 100.

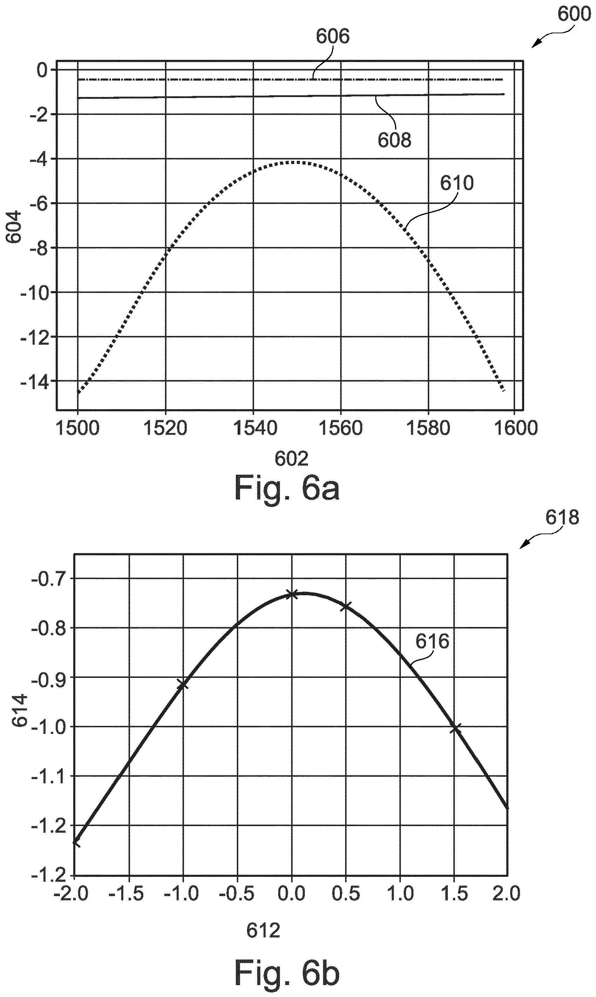

Fig. 3b shows a plurality of total internal reflection couplers 130. Furthermore, Fig. 3b shows pairs of total internal reflection couplers 130 that are connected by a U-shaped on-chip waveguide 132. Such pairs of total internal reflection couplers 130 are, e.g., used for the signal loss measurements of Figs. 6a and 6b.

Fig. 3c shows a vertical cross-section through a total internal reflection coupler 130. The total internal reflection coupler comprises a focusing surface 134 and a reflection surface 136. The incident light beam 116 enters the total internal reflection coupler 130 via the focusing surface 134 and is reflected at the reflection surface 136 to be redirected into the plane of the PIC.

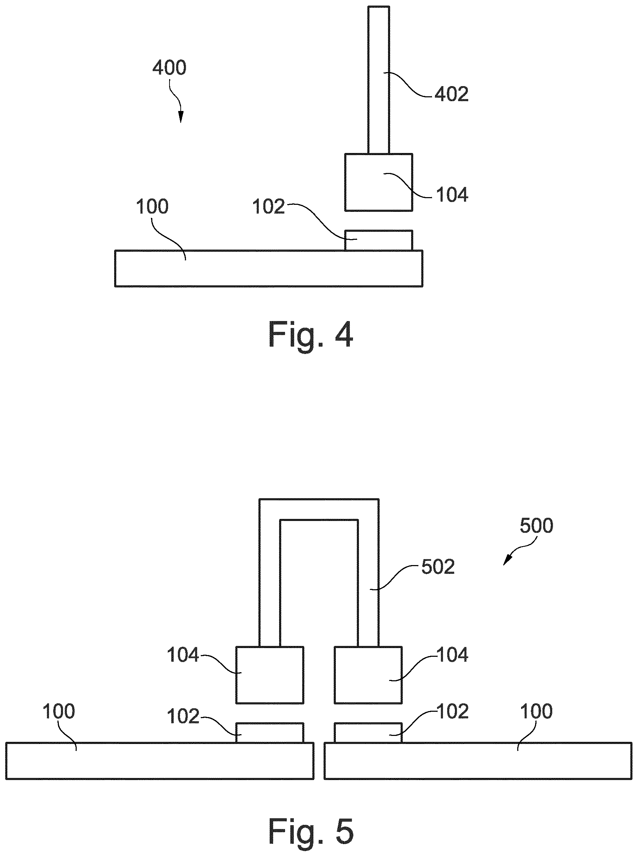

Fig. 4 shows a system 400 according to an exemplary embodiment. The system 400 comprises a PIC 100 with a PIC connector as shown, e.g., in Figs. 1 and 2a to 2c. The system further comprises the corresponding coupler 104, which is part of an optical cable 402.

Fig. 5 shows a system 500 according to an exemplary embodiment. The system 500 comprises a first PIC 100 and a second PIC 100, both PICs comprising a corresponding PIC connector 102. Furthermore, the system 500 further comprises an optical cable 502 with two corresponding connectors 104, each corresponding connector 104 being configured to connect to a corresponding one of the PIC couplers 102.

Fig. 6a shows a diagram 600. The x-axis 602 relates to the wavelength in micrometers and the y-axis 604 relates to the loss per coupler in dB. The dot-dashed line 606 shows the loss for a 6-axis stage optimization total internal reflection coupler. Thereby the PIC comprising a pair of total internal reflection couplers connected by a U-shaped on-chip waveguide as shown in Fig. 3b. The total internal reflection couplers are positioned underneath a fiber array. In order to measure the loss per coupler, the difference of the intensity of light emitted onto a first one of the pair of total internal reflection couplers and the light received from the second one of the pair of total internal reflection couplers is determined. Due to the low-loss of the SiN U-shaped on-chip waveguide the only source for losses are the losses resulting from the two total internal reflection couplers. Their position relative to the fiber array is optimized using a 6-axis stage with 3 translational and 3 rotational degrees of freedom in closed-loop mode measuring the total transmission of the device. The plotted result shows the transmission losses in dB of the optimal positioned total internal reflection coupler with respect to the fiber array for a wavelength sweep between 1500 and 1600 nm. For this purpose, a tunable laser source was used. The full line 608 shows the loss for a coupler as shown in Figs. 1 and 2, wherein the PIC comprises a plurality of total internal reflection couplers. The transmission losses have been measured using the same setup as described above exchanging the moveable fiber array against a corresponding coupler 104 shown in Fig. 1. The dotted line 610 shows the loss per coupler for a 6-axis stage optimization grating coupler. The transmission losses have been measured using the same setup as described with respect to the dot-dashed line 606, using grating couplers instead of total internal reflection couplers.

Fig. 6b shows a further diagram 618, where the x-axis 612 shows the deviation from an optimal position of the fiber array with respect to a total internal reflection coupler and the y-axis 614 shows the signal loss in dB. The line 616 shows the signal loss for a total internal reflection coupler as a function of the deviation from an optimal position. As can be seen, at the optimal position, the signal loss is about -0.7 dB. With a deviation of 1 µm from the optimal position, the signal loss is about -0.9 dB. With a deviation of 2 µm from the optimal position, the signal loss is about -1.2 dB.

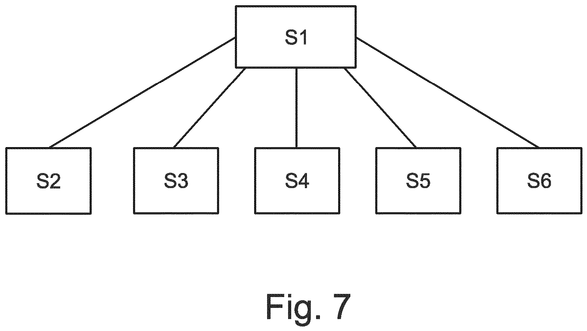

Fig. 7 shows a flowchart of a method of manufacturing a PIC according to the present invention.

The method comprises the steps S1 of providing a waveguide. Preferably the waveguide is provided on a substrate.

Furthermore, the method comprises the step S2 of providing a plurality of optical couplers onto the waveguide. The optical couplers may be 3D printed onto the waveguide, e.g., by Direct Laser Writing with a lateral resolution of 0.2 µm or less. The optical couplers may be formed of a resin having a yield of over 95% from near-infrared to UV wavelengths and a refractive index that is between the refractive index of the waveguide of the PIC and the refractive index of the substrate of the PIC.

The method further comprises the step S3 of providing an alignment structure onto the waveguide. The PIC alignment structure may be 3D printed onto the waveguide, e.g., by Direct Laser Writing with a lateral resolution of 1.5 µm or less. The PIC alignment structure may be formed of a resin that provide a high mechanical stability.

Step 4 of the method relates to providing a coupling structure onto the waveguide. The coupling structure may be formed by Direct Laser Writing with a lateral resolution of 1.5 µm or less in the same 3D printing step as the PIC alignment structure. The coupling structure may be formed of the same resin as the PIC alignment structure.

Furthermore, the method comprises step S5 of manufacturing a rough alignment structure. The rough alignment structure may be 3D printed by digital light processing. The rough alignment structure may be formed of a resin that provides a high mechanical stability.

The method further comprises step S6 of mounting the rough alignment structure to the PIC. The rough alignment structure may be mounted onto the PIC by engaging the coupling structures with corresponding coupling structures of the rough alignment structure. Furthermore, the rough alignment structure may be fixedly connected to a frame of the PIC, by means of one or more screws.

Further embodiments of the invention are set out in the following aspects:
1. A Photonic Integrated Circuit, PIC, comprising:
   a PIC connector for optical coupling of the PIC to a corresponding connector, the corresponding connector comprising a plurality of optical fibers, wherein the PIC connector comprises:
   a plurality of optical couplers, each optical coupler of the plurality of optical couplers being configured to optically couple to a corresponding optical fiber of the plurality of optical fibers;
   a PIC alignment structure configured to engage with a corresponding alignment structure of the corresponding connector so that, when the PIC alignment structure is engaged with the corresponding alignment structure, each optical coupler is aligned with the corresponding optical fiber of the plurality of optical fibers to enable an optical coupling between each optical coupler and the corresponding optical fiber of the plurality of optical fibers.
2. PIC according to any one of the preceding aspects,
   wherein the plurality of optical couplers comprises an out-of-plane coupler, preferably a 3D-printed out-of-plane coupler.
3. PIC according to any one of the preceding aspects,
   wherein each optical coupler of the plurality of optical couplers is an out-of-plane coupler, preferably a 3D-printed out-of-plane coupler.
4. PIC according to any one of the preceding aspects,
   wherein the plurality of optical couplers comprises a total internal reflection coupler;
   wherein, preferably, the total internal reflection coupler is 3D printed onto the PIC, more preferably by Direct Laser Writing, even more preferably with a lateral resolution of 0.2 µm or less, even more preferably with a lateral resolution of 0.1 µm or less;
   wherein, preferably, the total internal reflection coupler is formed of a resin.
5. PIC according to any one of the preceding aspects,
   wherein each optical coupler of the plurality of optical couplers is a total internal reflection coupler;
   wherein, preferably, each total internal reflection coupler is 3D printed onto the PIC, more preferably by Direct Laser Writing, even more preferably with a lateral resolution of 0.2 µm or less, even more preferably with a lateral resolution of 0.1 µm or less;
   wherein, preferably, each total internal reflection coupler is formed of a resin.
6. PIC according to any one of the preceding aspects,
   wherein the plurality of optical couplers comprises a grating coupler.
7. PIC according to any one of the preceding aspects,
   wherein each optical coupler of the plurality of optical couplers is a grating coupler.
8. PIC according to any one of the preceding aspects,
   wherein the PIC alignment structure comprises at least one protruding structure and the corresponding alignment structure of the corresponding connector comprises at least one recess configured to receive the at least one protruding structure.
9. PIC according to aspect 8,
   wherein the PIC alignment structure comprises two protruding structures, preferably only two protruding structures, and the corresponding alignment structure of the corresponding connector comprises two recesses, preferably only two recesses, each recess being configured to receive a corresponding one of the two protruding structures.
10. PIC according to aspect 8 or 9,
   wherein the at least one protruding structure is a pin.
11. PIC according to aspect 10,
   wherein the pin has a length between 1 mm and 2.4 mm, preferably between 1.3 mm and 2 mm, more preferably of 1.7 mm and/or a diameter between 650 µm and 750 µm, preferably between 680 µm and 705 µm, more preferably of 700 µm.
12. PIC according to any one of the preceding aspects,
   wherein the PIC alignment structure comprises at least one spacer to ensure that an end face of an optical fiber of the plurality of optical fibers is spaced apart from a corresponding optical coupler of the plurality of optical couplers by a predetermined distance when the PIC alignment structure is engaged with the corresponding alignment structure of the corresponding connector.
13. PIC according to aspect 12,
   wherein the at least one protruding structure is a pin; and
   wherein the at least one spacer comprises a base of the pin.
14. PIC according to any one of the preceding aspects,
   wherein each optical fiber comprises an end face that is angled with respect to a longitudinal axis of the optical fiber;
   wherein the PIC alignment structure is configured so that the longitudinal axis of each optical fiber is aligned at an angle with respect to the normal to a surface of the PIC when the PIC alignment structure is engaged with the corresponding alignment structure.
15. PIC according to aspect 14,
   wherein the end face of each optical fiber is angled with respect to its longitudinal axis at an angle of between 4° and 12°, preferably between 6° and 10°, more preferably 8°;
   wherein the PIC alignment structure comprises at least one protruding structure having a longitudinal axis, the longitudinal axis being angled with respect to a plane of the PIC at an angle of between 4° and 12°, preferably between 6° and 10°, more preferably 8°.
16. PIC according to any one of the preceding aspects, wherein the PIC alignment structure is 3D printed onto the PIC, preferably by Direct Laser Writing, more preferably with a lateral resolution of 1.5 µm or less.
17. PIC according to any one of the preceding aspects, wherein the PIC alignment structure is formed of a resin.
18. PIC according to any one of the preceding aspects, wherein the optical couplers are 3D printed onto the PIC, preferably by Direct Laser Writing, more preferably with a lateral resolution of 0.2 µm or less.
19. PIC according to any one of the preceding aspects, wherein the optical couplers are formed of a resin.
20. PIC according to any one of the preceding aspects, wherein the PIC alignment structure and the plurality of optical couplers are 3D printed onto the PIC using the same 3D printing process, preferably Direct Laser Writing, more preferably with a lateral resolution of 1.5 µm or less.
21. PIC according to any one of the preceding aspects, further comprising
   a rough alignment structure mechanically coupled to the PIC, the rough alignment structure forming a socket for the corresponding connector.
22. PIC according to aspect 21, wherein the rough alignment structure is configured to set a position of the corresponding connector in a plane of the PIC.
23. PIC according to aspect 22, wherein the rough alignment structure is configured to set an angle of the corresponding connector with respect to the plane of the PIC.
24. PIC according to any one of aspects 21 to 23,
   wherein the rough alignment structure is formed by 3D printing
25. PIC according to aspect 24,
   wherein the rough alignment structure is formed by digital light processing 3D printing.
26. PIC according to any one of aspects 21 to 25,
   wherein the PIC comprises a coupling structure configured to engage with the rough alignment structure.
27. PIC according to aspect 26,
   wherein the coupling structure comprises at least one protruding structure.
28. PIC according to aspect 27,
   wherein the at least one protruding structure of the coupling structure is a pin.
29. PIC according to any one of aspects 26 to 28,
   wherein the coupling structure is 3D printed onto the PIC, preferably by Direct Laser Writing, more preferably with a lateral resolution of 1.5 µm or less.
30. PIC according to aspect 29,
   wherein the coupling structure and the PIC alignment structure are 3D printed onto the PIC using the same 3D printing process, preferably Direct Laser Writing, more preferably with a lateral resolution of 1.5 µm or less.
31. PIC according to aspect 30,
   wherein the coupling structure, the PIC alignment structure and the plurality of optical couplers are 3D printed onto the PIC using the same 3D printing process, preferably Direct Laser Writing, more preferably with a lateral resolution of 0.2 µm or less for the optical couplers and with a lateral resolution of 1.5 µm or less for the coupling structure and the PIC alignment structure.
32. PIC according to any one of aspects 26 to 31, wherein the coupling structure is formed of a resin.
33. PIC according to any one of aspects 26 to 31, wherein the coupling structure and the PIC alignment structure are formed of the same resin.
34. PIC according to any one of the preceding aspects, wherein the PIC comprises at least 6, preferably at least 12, more preferably at least 24 optical couplers.
35. PIC according to any one of the preceding aspects, wherein the PIC comprises at least one row of optical couplers, the at least one row preferably comprising at least 6 optical couplers; and/or
   wherein the corresponding connector comprises at least one row of optical fibers, the at least one row preferably comprising at least 6 optical couplers.
36. System comprising the PIC according to any one of the preceding aspects and the corresponding connector.
37. System of aspect 36, further comprising a fiber-optic cable, wherein the corresponding connector is provided on one end of the fiber-optic cable.
38. System comprising a first PIC according to any one of aspects 1 to 35, a second PIC according to any one of aspects 1 to 35 and a fiber-optic cable comprising a first corresponding connector configured to connect to the first PIC and a second corresponding connector configured to connect to the second PIC.
39. Method of manufacturing a Photonic Integrated Circuit, PIC, preferably the PIC of any one of aspects 1 to 35, comprising:
   providing a waveguide;
   providing a plurality of optical couplers onto the waveguide, each optical coupler of the plurality of optical couplers being configured to optically couple to a corresponding optical fiber of a plurality of optical fibers; and
   providing a PIC alignment structure onto the waveguide, the PIC alignment structure being configured to engage with a corresponding alignment structure of a corresponding connector, the corresponding connector comprising the plurality of optical fibers, so that, when the PIC alignment structure is engaged with the corresponding alignment structure, each optical coupler is aligned with a corresponding optical fiber of the plurality of optical fibers to enable an optical coupling between each optical coupler and the corresponding optical fiber of the plurality of optical fibers.
40. Method of aspect 39, wherein the PIC alignment structure comprises at least one spacer to ensure that an end face of an optical fiber of the plurality of optical fibers is spaced apart from a corresponding optical coupler of the plurality of optical couplers by a predetermined distance when the PIC alignment structure is engaged with the corresponding alignment structure of the corresponding connector.
41. Method of aspect 39 or 40, wherein the PIC alignment structure is 3D printed onto the PIC, preferably by Direct Laser Writing, more preferably with a lateral resolution of 1.5 µm or less.
42. Method of any one of aspects 39 to 41, wherein the PIC alignment structure is formed of a resin.
43. Method of any one of aspects 39 to 42, wherein the plurality of optical couplers is provided by 3D printing a plurality of total internal reflection couplers onto the waveguide, preferably by Direct Laser Writing, more preferably with a lateral resolution of 0.2 µm or less.
44. Method of any one of aspects 39 to 43, wherein the plurality of optical couplers are formed of a resin.
45. Method of any one of aspects 39 to 44, further comprising:
   providing a rough alignment structure, the rough alignment structure being configured to be mechanically coupled to the PIC, the rough alignment structure forming a socket for the corresponding connector.
46. Method of aspect 45, wherein the rough alignment structure is formed by 3D printing, preferably by digital light processing 3D printing.
47. Method of aspect 45 or 46, further comprising:
   providing a coupling structure onto the waveguide, the coupling structure being configured to engage with the rough alignment structure.
48. Method according to aspect 47,
   wherein the coupling structure is 3D printed onto the PIC, preferably by Direct Laser Writing, more preferably with a lateral resolution of 1.5 µm or less.
49. Method according to aspect 48, wherein the coupling structure is formed of a resin.
50. Method according to any one of aspects 47 to 49,
   wherein the coupling structure and the PIC alignment structure are 3D printed onto the waveguide using the same 3D printing process, preferably Direct Laser Writing, more preferably with a lateral resolution of 1.5 µm or less.
51. Method according to any one of aspects 47 to 50, wherein the coupling structure and the PIC alignment structure are formed of the same resin.
52. Method according to any one of aspects 47 to 51,
   wherein the coupling structure, the PIC alignment structure and the optical couplers are 3D printed onto the waveguide using the same 3D printing process, preferably Direct Laser Writing, more preferably with a lateral resolution of 0.2 µm or less for the optical couplers and with a lateral resolution of 1.5 µm or less for the coupling structure and the PIC alignment structure.

### List of reference signs:

- 100: Photonic Integrated Circuit (PIC)
- 102: PIC connector
- 104: corresponding connector
- 106: plurality of optical fibers
- 106a, 106b, 106c: optical fiber
- 108: plurality of optical couplers
- 108a, 108b, 108c: optical coupler
- 110: PIC alignment structure
- 111: recess
- 112: grating coupler
- 114: gratings
- 116: light beam
- 120: pin
- 122: base
- 123: spacer pad
- 124: rough alignment structure
- 126: socket
- 128: coupling structure
- 130: total internal reflection coupler
- 132: U-shaped waveguide
- 134: focusing surface
- 136: reflection surface
- 400: system
- 402: cable
- 500: system
- 502: cable
- 600: diagram
- 602: x-axis (wavelength in µm)
- 604: y-axis (loss per coupler in dB)
- 606: loss for 6-axis stage optimization total internal reflection coupler
- 608: loss for a total internal reflection coupler according to the invention
- 610: loss for 6-axis stage optimization grating coupler
- 612: x-axis (deviation from optimal position in in µm)
- 614: y-axis (loss per coupler in dB)
- 616: loss per coupler as a function of the deviation from optimal position
- 618: diagram

## Claims

1. A Photonic Integrated Circuit, PIC, comprising:
a PIC connector for optical coupling of the PIC to a corresponding connector, the corresponding connector comprising a plurality of optical fibers, wherein the PIC connector comprises:
a plurality of optical couplers, each optical coupler of the plurality of optical couplers being configured to optically couple to a corresponding optical fiber of the plurality of optical fibers; and
a PIC alignment structure configured to engage with a corresponding alignment structure of the corresponding connector so that, when the PIC alignment structure is engaged with the corresponding alignment structure, each optical coupler is aligned with the corresponding optical fiber of the plurality of optical fibers to enable an optical coupling between each optical coupler and the corresponding optical fiber of the plurality of optical fibers.

2. PIC according to claim 1,
wherein each optical coupler of the plurality of optical couplers is an out-of-plane coupler, preferably a 3D-printed out-of-plane coupler; and
wherein, preferably, each optical coupler of the plurality of optical couplers is a total internal reflection coupler.

3. PIC according to any one of the preceding claims,
wherein each optical coupler of the plurality of optical couplers is a grating coupler.

4. PIC according to any one of the preceding claims,
wherein the PIC alignment structure comprises at least one protruding structure and the corresponding alignment structure of the corresponding connector comprises at least one recess configured to receive the at least one protruding structure; and
wherein, preferably, the at least one protruding structure is a pin.

5. PIC according to any one of the preceding claims,
wherein the PIC alignment structure comprises at least one spacer to ensure that an end face of an optical fiber of the plurality of optical fibers is spaced apart from a corresponding optical coupler of the plurality of optical couplers by a predetermined distance when the PIC alignment structure is engaged with the corresponding alignment structure of the corresponding connector.

6. PIC according to claim 5,
wherein the at least one protruding structure is a pin; and
wherein the at least one spacer comprises a base of the pin.

7. PIC according to any one of the preceding claims,
wherein each optical fiber comprises an end face that is angled with respect to a longitudinal axis of the optical fiber;
wherein the PIC alignment structure is configured so that the longitudinal axis of each optical fiber is aligned at an angle with respect to the normal to a surface of the PIC when the PIC alignment structure is engaged with the corresponding alignment structure;
wherein, preferably, the end face of each optical fiber is angled with respect to its longitudinal axis at an angle of between 4° and 12°, more preferably between 6° and 10°, even more preferably 8°;
wherein, preferably, the PIC alignment structure comprises at least one protruding structure having a longitudinal axis, the longitudinal axis being angled with respect to a plane of the PIC at an angle of between 4° and 12°, more preferably between 6° and 10°, even more preferably 8°.

8. PIC according to any one of the preceding claims, wherein the PIC alignment structure is 3D printed onto the PIC, preferably by Direct Laser Writing, more preferably with a lateral resolution of 1.5 µm or less;
wherein the optical couplers are 3D printed onto the PIC, preferably by Direct Laser Writing, more preferably with a lateral resolution of 0.2 µm or less.

9. PIC according to any one of the preceding claims, further comprising
a rough alignment structure mechanically coupled to the PIC, the rough alignment structure forming a socket for the corresponding connector.

10. PIC according to claim 9,
wherein the PIC comprises a coupling structure configured to engage with the rough alignment structure.

11. PIC according to claim 10,
wherein the coupling structure is 3D printed onto the PIC, preferably by Direct Laser Writing, more preferably with a lateral resolution of 1.5 µm or less.

12. PIC according to any one of the preceding claims, wherein the PIC comprises at least one row of optical couplers, the at least one row preferably comprising at least 6 optical couplers; and/or
wherein the corresponding connector comprises at least one row of optical fibers, the at least one row preferably comprising at least 6 optical couplers.

13. System comprising the PIC according to any one of the preceding claims and the corresponding connector.

14. Method of manufacturing a Photonic Integrated Circuit, PIC, preferably the PIC of any one of claims 1 to 12, comprising:
providing a waveguide;
providing a plurality of optical couplers onto the waveguide, each optical coupler of the plurality of optical couplers being configured to optically couple to a corresponding optical fiber of a plurality of optical fibers; and
providing a PIC alignment structure onto the waveguide, the PIC alignment structure being configured to engage with a corresponding alignment structure of a corresponding connector, the corresponding connector comprising the plurality of optical fibers, so that, when the PIC alignment structure is engaged with the corresponding alignment structure, each optical coupler is aligned with a corresponding optical fiber of the plurality of optical fibers to enable an optical coupling between each optical coupler and the corresponding optical fiber of the plurality of optical fibers.

15. Method of claim 14, wherein the PIC alignment structure is 3D printed onto the PIC, preferably by Direct Laser Writing, more preferably with a lateral resolution of 1.5 µm or less; and/or
wherein the plurality of optical couplers is provided by 3D printing a plurality of total internal reflection couplers onto the waveguide, preferably by Direct Laser Writing, more preferably with a lateral resolution of 0.2 µm or less; and/or
further comprising providing a rough alignment structure, the rough alignment structure being configured to be mechanically coupled to the PIC, the rough alignment structure forming a socket for the corresponding connector, and providing a coupling structure onto the waveguide, the coupling structure being configured to engage with the rough alignment structure, wherein the coupling structure is 3D printed onto the PIC, preferably by Direct Laser Writing, more preferably with a lateral resolution of 1.5 µm or less.
